# EUROPEAN PATENT APPLICATION

(11) **EP 0 653 555 A1**
(43) Date of publication of application: **17.05.1995**
(21) Application number: 94308106.7
(22) Date of filing: 03.11.1994
(51) Int. Cl.: F02B 29/00, F02B 17/00

(54) **Method and apparatus for improving exhaust emission for internal combustion engine**

(30) Priority: 16.11.1993 GB 9323596
(71) Applicant: TICKFORD LIMITED, Milton Keynes Buckinghamshire MK14 5BN (GB)
(72) Inventor: Sykes, Richard Geoffrey, Cranfield, Bedford MK43 0DL (GB)
(74) Representative: Gregory, Timothy Mark

(57) **Abstract**

The engine has a piston (2) reciprocable within a cylinder (1) and provided with at least one piston ring (3) to ensure a close sliding fit within the cylinder (1). The uppermost piston ring (3) is so disposed as to define an annular space (4) above it and between the wall of the piston (2) and the cylinder wall (3). At least one inlet (5) is provided to said annular space (4), and means (7) are provided to supply fluid, such as air or harmless gas, to the inlet or inlets (5). The introduction of the air purges hydrocarbon gas from the space (4) and discourages its introduction into the space (4). Since hydrocarbon gas mixture in the space (4) is unlikely to be combusted fully, its exclusion from the space (4) improves the quality of the exhaust gases.

## Description

The present invention relates to a method and apparatus for improving exhaust emission for internal combustion engines. More particularly, it relates to a system which is intended to reduce the amount of unburnt hydrocarbon gas which is emitted by the engine as part of its exhaust.

Most internal combustion engines operate on the principle of having a plurality of cylinders, each containing a respective piston which moves upwardly and downwardly within the cylinder. The terms upwardly and downwardly and similar terms are used herein, although of course, it will be possible to place the piston/cylinder on its side or at any angle. In such cases, the term upwardly and like terms are intended to refer to positions toward the crown of the cylinder wherein are located inlet and outlet means together with any ignition means while downwardly and like terms are intended to refer to positions within the cylinder remote from the inlet means and nearer to the crankshaft being driven by the piston.

The piston is not a close fit within the cylinder since their relative diameters may vary in use due to the heat generated by the explosions within the cylinder. In order to prevent leakage, at least one piston ring is fitted around the piston to engage the walls of the cylinder. Such a piston ring encircles the periphery of the piston at a position below its uppermost surface.

Thus, there is defined an annular space between the piston wall, the internal cylinder wall and at its lower end, the uppermost piston ring. This space may be referred to as a top land.

When fuel/air mixture is introduced into the combustion chamber above the piston, and subsequently compressed by the upward motion of the piston this top land becomes filled with the mixture. However, when the mixture in the combustion chamber is ignited, the combustion flame front cannot fully burn the mixture in this top land since flame access to the area is difficult.

The depth of this top land may have a depth of 1mm or greater, more usually 3mm or greater, particularly in the case of diesels, and its radial dimension may be between 0.1 and 5mm when the engine is cold. Attempts have been made to reduce the volume of this crevice but these can lead to piston/bore interface problems. Attempts to enlarge the flame access to the area can lead to a worsened situation or mechanical failure.

It is an object of the present invention to purge this top land area with air, or other non-objectionable fluid, so that its content of fuel/air mixture is reduced, whereby less unburnt hydrocarbon fuel is expelled or removed therefrom during the exhaust stroke of the engine, and to leave a local layer of air or fluid immediately above and/or within the land to isolate the fuel/air mixture within the cylinder and reduce the amount of fuel compressed into the crevice volume during the compression stroke, whereby less hydrocarbon fuel is trapped and subsequently expelled unburnt during the exhaust stroke.

According to the present invention there is provided an internal combustion engine having a piston reciprocable within a cylinder, the piston being provided with at least one piston ring to ensure a close sliding fit within the cylinder, the or an uppermost one of said at least one piston rings being so disposed as to define an annular space above it and between the wall of the piston and the cylinder wall, wherein there is provided at least one inlet to said annular space, and means to supply fluid, such as air or harmless gas, to said at least one inlet.

Preferably the cylinder is provided with at least one aperture at a location substantially corresponding to said annular space when the piston is at or near a lowermost position in its travel, and means are provided to supply fluid, preferably air, through said at least one aperture to said space.

Recycling means may be provided to return excess air or fluid to the supply or to the main induction flow from a crankcase ventilation system during the periods when the piston is so raised that at least one aperture is not in communication with the annular space.

In an alternative embodiment, the piston is provided with at least one inlet to said annular space and valve means are provided to close said inlet or inlets against engine cylinder pressure higher than that of the fluid supply.

In this case, the valve means may be a respective reed valve covering the or each inlet and comprising a strip of spring steel or the like material.

Where a plurality of such reed valves are provided, they may be formed from a strip of material adapted to encircle the piston.

The or each inlet preferably communicates with a groove in the piston adapted to receive a piston ring and which may be provided with radially extending passages in its upper surface whereby fluid flow is directed to the annular space.

Preferably there is provided a plurality of apertures around the cylinder optionally spaced substantially equiangularly.

The plurality of apertures may be supplied with air through a duct means communicating with said apertures and with an air supply rail optionally adapted to supply air to other cylinders of the engine.

The air supply is preferably at a pressure greater than that existing in the space when the piston is at or near its lowermost position, or at the beginning of the exhaust stroke.

According to another aspect of the invention, there is provided a method of reducing unburnt hydrocarbon gas emitted by an internal combustion engine comprising the step of introducing a supply of air or other harmless gas into a combustion chamber of the engine at a zone thereof least affected by a combustion flame initiated within the combustion chamber.

Preferably the zone comprises an annulus defined between an inner wall of the cylinder, an outer wall of a piston and an uppermost piston ring surrounding the piston.

In one embodiment the supply of air or other harmless gas is introduced via one or more apertures in the wall of a cylinder bounding the combustion chamber. In this case the supply may be continuous and may connect with said zone when the piston is a lower disposition.

In another embodiment the supply of air or other harmless gas is introduced via one or more apertures in a piston defining the combustion chamber. In this case, the supply may be controlled by one or more non return valves adapted to provide the supply when the pressure in the combustion chamber is comparatively low.

Embodiments of the invention will now be more particularly described with reference to the accompanying drawings, in which:
Figure 1 is a schematic perspective view of a cylinder of an engine including a first embodiment of the invention;
Figure 2 is a schematic cross sectional view of a piston and cylinder according to Figure 1 and in an upper disposition;
Figure 3 is a schematic cross sectional view of a piston and cylinder according to Figure 1 and in a lower disposition;
Figure 4 is a schematic cross sectional view of a piston end cylinder showing a second embodiment of the invention;
Figure 5 is a scrap view in elevation of an upper part of the piston shown in Figure 4; and
Figure 6 is a scrap view, in cross section, of an upper part of the piston of Figure 4.

Referring now to the drawings, an internal combustion engine cylinder 1, which may be one of a number present in an engine, is provided with a piston 2 reciprocable within the cylinder. Each such piston 2 is provided with a number of piston rings 3 to ensure engagement between the piston 2 and the cylinder 1.

As may be seen, there is an annular space 4 defined between the walls of the piston 2 and the cylinder 1, and stopped by an uppermost piston ring 3. The flame front initiated by a spark plug or other device does not easily reach such a space. Hence the mixture of fuel and air contained therein may not be burned fully and therefore may go to exhaust in an unburnt state during an exhaust cycle of the engine. This will constitute a pollution problem.

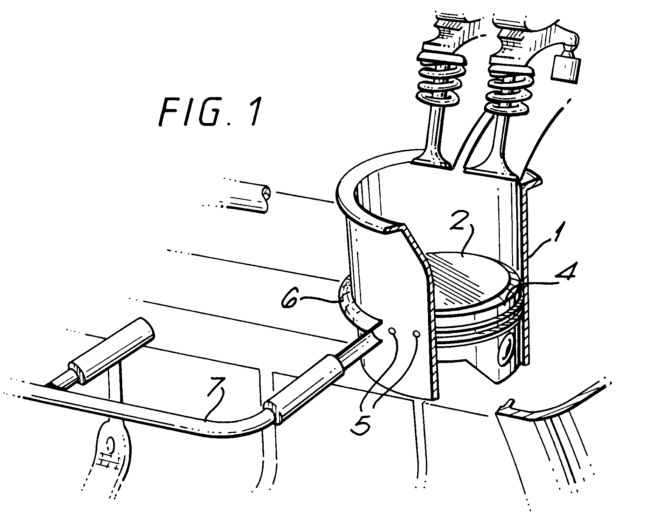

Referring now to Figures 1 to 3, a cylinder 1 of the engine embodying the present invention comprises a plurality of apertures 5, disposed substantially equiangularly or at convenient spacings around the periphery of the cylinder at a position corresponding substantially with the position of the top land or space 4 when it is in a lowermost disposition.

A supply of air or other non objectionable gas is passed continuously through rail 7 exterior to the cylinder and thence to an inlet apparatus 6 surrounding each cylinder. This supplies the plurality of apertures 5 of each cylinder.

The supply of air under pressure (which may be higher than that existing in the cylinder at the end of the induction stroke) is maintained during the entire four strokes.

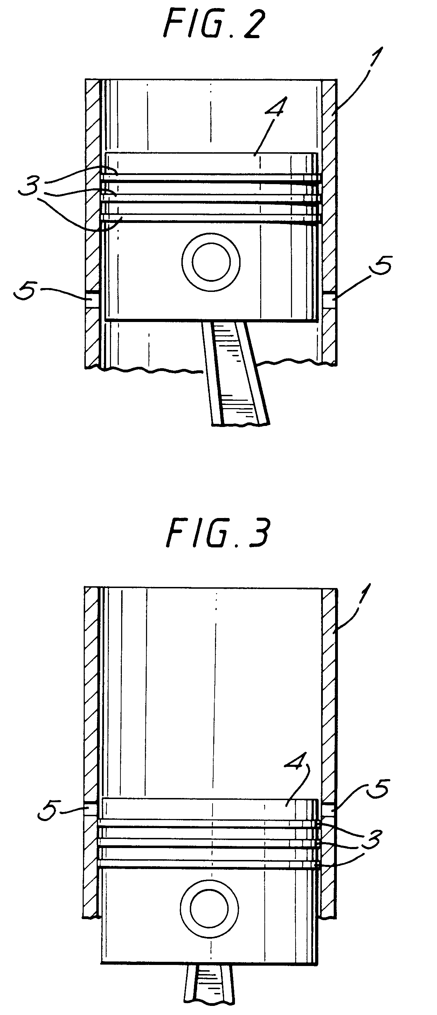

When the piston is in an uppermost position, such as is shown in Figure 2 the air supplied through apertures 5 could be introduced below the piston and recycled via the normal crankcase ventilation system.

However, when the top land or space 4 is aligned with the apertures 5, a charge of clean air or gas is introduced to the space 4.

This air charge purges any fuel/air mixture from the space 4 and leaves a local layer of air or fluid which forms a barrier within and above the space 4 and therefore reduces the amount of fuel/air mixture from entering the space 4 during a compression stroke. The air charge may remain in place throughout the cycle, in which case, it will, if necessary be replenished at a beginning of any exhaust cycle, when the piston 2 is in the region of bottom dead centre again.

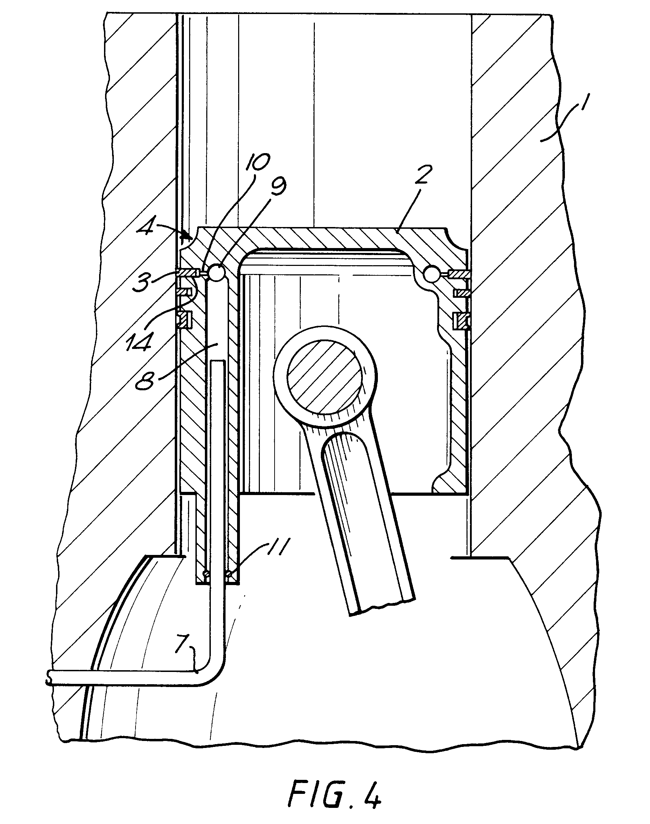

A further embodiment of the invention is shown in Figures 4 to 6.

In this embodiment, the air or other harmless gas or fluid is introduced into the shell of the piston 2 via its lower end. The rail 7 passes into a bore 8 in the wall of the piston 2, and extends therein for such a length that it will remain therein even when the piston is at top dead centre. The connection between the rail 7 and the bore 8 is sealed by means of one or more O-rings 11 to be substantially gas or air tight.

The bore 8 communicates with a toroidal gallery 9 extending around the piston at a level adjacent the uppermost piston ring 3. From this gallery 9, a plurality of apertures 10 communicate to the outside of the piston at a point immediately behind the uppermost piston ring 3, where there is a groove 14 in the exterior periphery of the piston.

Air or harmless gas is supplied adjacent the uppermost piston ring 3 and can flow via channels 12 in the piston which extend radially above the groove so that the gas may flow above the piston ring 3 into the top land 4.

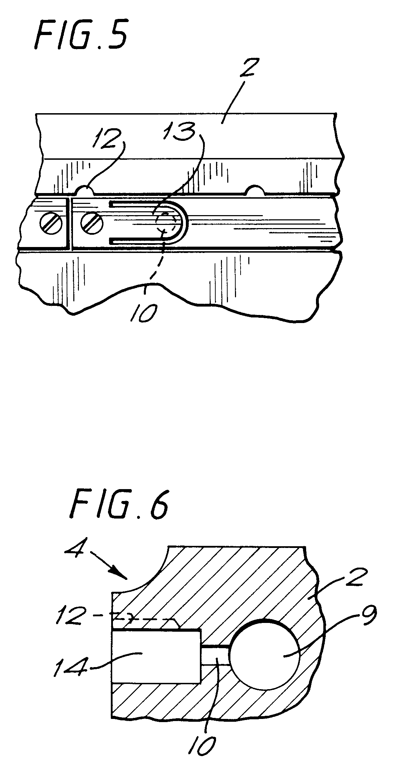

In order to control the flow of air or harmless gas through apertures 10, each one may be covered by a reed valve 13. In the preferred embodiment, this is formed simply by stamping a U-shaped hole in a strip of spring steel or the like material which encircles the piston within the groove 14 accommodating the uppermost piston ring 3. The spacing of the reed valves 13 is obviously determined by the position of the apertures 10, but the entire assembly can be made in one piece and attached to the periphery of the piston by means of a screw at each end, as is shown in Figure 5.

Since the top land 4 is maintained substantially filled with air or other harmless gas, it will not be filled with fuel/air mixture which would be unburnt and would escape or leak into the exhaust, thereby polluting the external atmosphere. Hence emissions from the engine are less likely to be detrimental to the environment.

## Claims

1. An internal combustion engine having a piston (2) reciprocable within a cylinder (1), the piston (2) being provided with at least one piston ring (3) to ensure a close sliding fit within the cylinder (1), the or an uppermost one of said at least one piston rings (3) being so disposed as to define an annular space (4) above it and between the wall of the piston (2) and the cylinder (1) wall, characterised in that there is provided at least one inlet (5) to said annular space, and means (6, 7) to supply fluid, such as air or harmless gas, to said at least one inlet.

2. An engine as claimed in claim 1, characterised in that the cylinder (1) is provided with at least one aperture (5) at a location substantially corresponding to said annular space (4) when the piston (2) is at or near a lowermost position in its travel, and means (6, 7) are provided to supply fluid, preferably air, through said at least one aperture (5) to said space (4).

3. An engine as claimed in either claim 1 or claim 2, characterised in that recycling means are provided to return excess air or fluid to the supply or to the main induction flow from a crankcase ventilation system during the periods when the piston (2) is so raised that at least one aperture (5) is not in communication with the annular space (4).

4. An engine as claimed in claim 1, characterised in that the piston is provided with at least one inlet (10) to said annular space (4) and valve means (13) are provided to close said inlet or inlets (10) against engine cylinder pressure higher than that of the fluid supply.

5. An engine as claimed in claim 4, characterised in that the valve means (13) may be a respective non-return valve such as a reed valve covering the or each inlet and comprising a strip of spring steel or the like material.

6. An engine as claimed in claim 5, characterised in that the or each non-return valve may be formed from a strip of material adapted to encircle the piston.

7. An engine as claimed in any one of claims 4 to 6, characterised in that the or each inlet (10) communicates with a groove (14) in the piston (2) adapted to receive a piston ring (3) and which is provided with radially extending passages (12) in its upper surface whereby fluid flow is directed to the annular space (4).

8. An engine as claimed in any one of the preceding claims, characterised in that there is provided a plurality of inlets (10) around the piston or cylinder, optionally spaced substantially equiangularly.

9. An engine as claimed in claim 8, characterised in that the plurality of inlets (10) are supplied with air through a duct means (6, 9) communicating with said apertures and with an air supply rail (7, 8) optionally adapted to supply air to other cylinders of the engine.

10. An engine as claimed in any one of the preceding claims, characterised in that the air supply is at a pressure greater than that existing in the space when the piston is at or near its lowermost position, or at the beginning of the exhaust stroke.

11. A method of reducing unburnt hydrocarbon gas emitted by an internal combustion engine comprising the step of introducing a supply of air or other harmless gas into a combustion chamber of the engine at a zone thereof least affected by a combustion flame initiated within the combustion chamber.

12. A method as claimed in claim 11, characterised in that the zone comprises an annulus defined between an inner wall of the cylinder, an outer wall of a piston and an uppermost piston ring surrounding the piston.

13. A method as claimed in either claim 11 or claim 12, characterised in that the supply of air or other harmless gas is introduced via one or more apertures in the wall of a cylinder bounding the combustion chamber.

14. A method as claimed in claim 13, characterised in that the supply is continuous and connects with said zone when the piston is at a lower disposition.

15. A method as claimed in either claim 11 or claim 12, characterised in that the supply of air or other harmless gas is introduced via one or more apertures in a piston defining the combustion chamber.

16. A method as claimed in claim 15, characterised in that the supply is controlled by one or more non return valves adapted to provide the supply when the pressure in the combustion chamber is comparatively low.
